# EUROPÄISCHE PATENTSCHRIFT

(11) **EP 0 487 538 B1**
(45) Veröffentlichungstag und Bekanntmachung des Hinweises auf die Patenterteilung: **18.05.1994**
(21) Anmeldenummer: 90910565.2
(22) Anmeldetag: 26.07.1990
(51) Int. Cl.: B60H 1/08, F04D 15/00, F01P 5/10, F01P 7/16

(54) **VORRICHTUNG ZUM BEHEIZEN DES FAHRGASTRAUMES EINES KRAFTFAHRZEUGES**
HEATING DEVICE FOR THE SEATING COMPARTMENT OF MOTOR VEHICLES
DISPOSITIF DE CHAUFFAGE DE L'INTERIEUR DE VEHICULES A MOTEUR

(30) Priorität: 19.08.1989 DE 3927391
(43) Veröffentlichungstag der Anmeldung: 03.06.1992
(73) Patentinhaber: ROBERT BOSCH GMBH, 70442 Stuttgart (DE)
(72) Erfinder: SCHIRPKE, Bernd, D-7580 Bühl (DE); LENTZ, Gerd, D-7580 Bühl-Oberweier (DE); HEIER, Christoph, D-7557 Iffezheim (DE); Bächle, Georg, Dipl.-Ing., W-8034 Germering (DE)
(86) Internationale Anmeldenummer: DE9000571
(87) Internationale Veröffentlichungsnummer: WO9102659

(56) Entgegenhaltungen:
- EP-A- 240 777
- FR-A- 2 537 509
- GB-A- 1 040 953
- US-A- 2 749 049
- US-A- 4 308 994

## Beschreibung

### Stand der Technik

Die Erfindung geht aus von einer Heizvorrichtung nach der Gattung des Hauptanspruchs, wie sie beispielsweise in der US-A-4 380 944 beschrieben ist. Es ist schon eine solche Vorrichtung im Handel, bei der das Förderglied in Richtung seiner Drehachse gesehen ortsfest - und zwar aus Gründen der Effektivität der Pumpe - nahe der Saugöffnung angeordnet ist. Bei bestimmten Betriebszuständen der Heizvorrichtung kann die Kühlwasserpumpe volle Förderleistung bringen, während die im Heizkreislauf liegende Förderpumpe stillgesetzt ist. Wenn dann der Heizkreislauf nicht vom Kühlmittelkreislauf getrennt werden kann, wird die Pumpe des Heizkreislaufs durch den von der Kühlmittelpumpe erzeugten Mediumstrom durchströmt. Dabei wird dann auch die Heizkreislaufpumpe durch das sie durchströmende Medium angetrieben, während der Elektromotor aber stillsteht. Damit reißt die magnetische Kupplung zwischen Pumpe und Antriebsmotor ab. Beim späteren Anlauf des Elektromotors ist eine Kopplung der beiden Kupplungshälften dann aber unmöglich. Um eine Kopplung zwischen den beiden Kupplungshälften herbeizuführen, müßte zunächst der Verbrennungsmotor und der Elektromotor abgestellt werden. Weil dieser Mangel aber auch bei laufendem Elektromotor auftreten kann, spricht man von einem sogenannten "Überströmen" der Heizkreislaufpumpe. Dies ist möglich, weil die Fördermenge der Kühlmittelkreislaufpumpe die der Pumpe im Heizkreislauf erheblich übersteigt.

### Vorteile der Erfindung

Die erfindungsgemäße Heizvorrichtung mit den kennzeichnenden Merkmalen des Hauptanspruchs hat demgegenüber den Vorteil, daß bei einer unter dem Förderdruck der Kühlmittelkreislaufpumpe höheren Durchflußmenge in der Heizkreislaufpumpe, das einströmende Medium das Förderglied dieser Pumpe aus dessen Arbeitsposition nahe der Saugöffnung in die andere Betriebsstellung drückt, so daß der Durchströmquerschnitt erheblich erweitert wird. Dadurch bleibt auch bei einer sogenannten Überströmung der Heizkreislaufpumpe die Kopplung der beiden Kupplungshälften erhalten.

Durch die in den Unteransprüchen aufgeführten Maßnahmen sind vorteilhafte Weiterbildungen und Verbesserungen der im Hauptanspruch angegebenen Heizvorrichtung möglich.

### Zeichnung

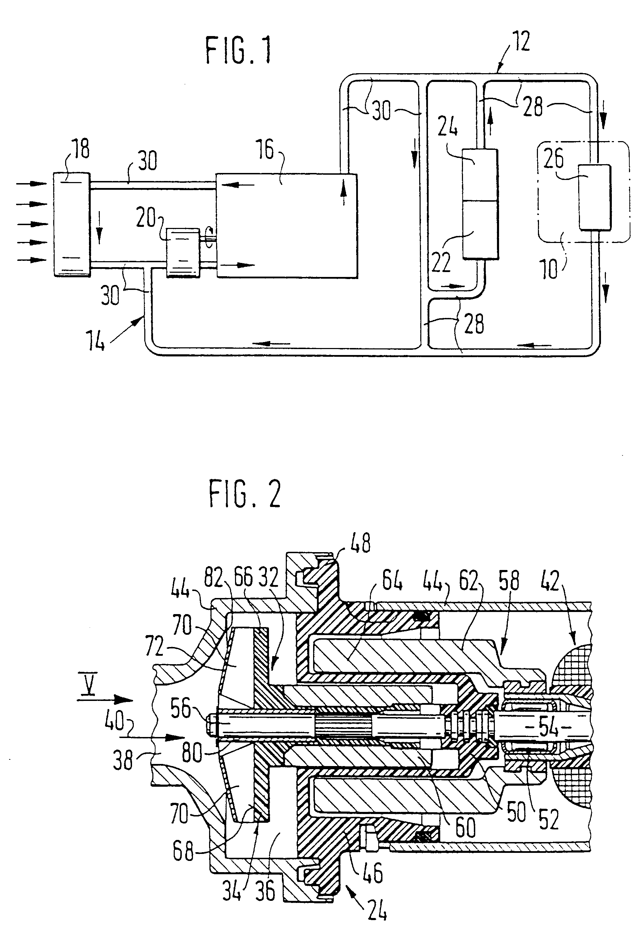

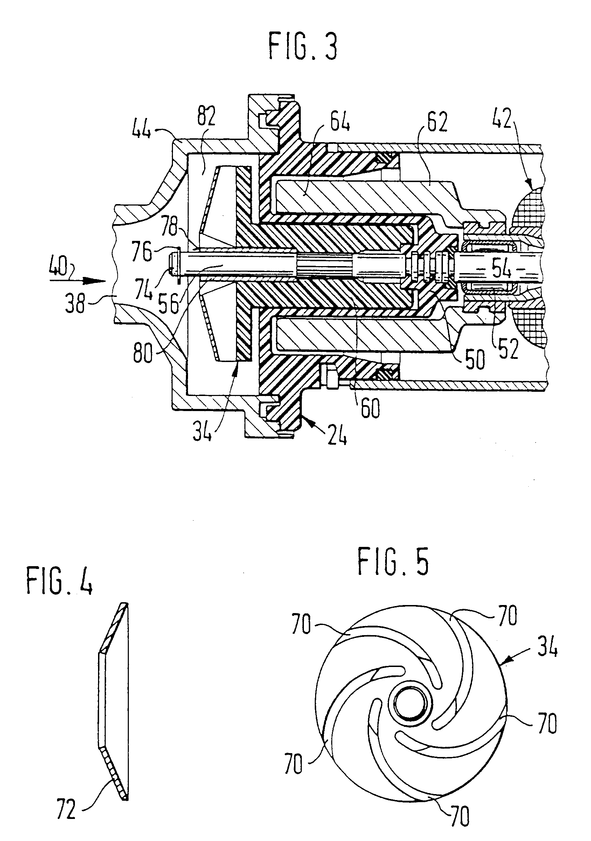

Ein Ausführungsbeispiel der Erfindung ist in der Zeichnung dargestellt und in der nachfolgenden Beschreibung näher erläutert. Es zeigen Figur 1 eine unmaßstäbliche Prinzipdarstellung einer Vorrichtung zum Beheizen des Fahrgastraumes eines Kraftfahrzeuges, Figur 2 einen Teilschnitt durch den Pumpenbereich eines aus Elektromotor und Förderpumpe bestehenden Förderaggregats, in vergrößerter Darstellung, wobei das Förderglied der Pumpe sich in einer ersten Betriebsstellung befindet, Figur 3 einen Teilschnitt gemäß Figur 2, mit dem in einer zweiten Betriebsstellung befindlichen Förderglied, Figur 4 einen Schnitt durch einen zu dem Förderglied gehörenden Abdeckring und Figur 5 eine Draufsicht auf das Förderglied der Pumpe gemäß Figur 2 in Richtung des Pfeiles V gesehen, wobei der Abdeckring entfernt ist.

### Beschreibung des Ausführungsbeispiels

In Figur 1 ist eine Vorrichtung dargestellt, die zum Beheizen des Fahrgastraumes 10 eines nicht näher dargestellten Kraftfahrzeuges dient. Diese Vorrichtung weist einen Heizkreislauf 12 auf, der an einen Kühlflüssigkeitskreislauf 14 für eine Brennkraftmaschine 16 des Kraftfahrzeuges angeschlossen ist. Der Kühlmittelkreislauf 14 weist einen luftbeaufschlagten Kühler 18 auf. Weiter hat der Kühlmittelkreislauf 14 eine Kühlmittelpumpe 20, welche von der Brennkraftmaschine 16 des Kraftfahrzeuges mechanisch angetrieben wird. Der Heizkreislauf 12 weist im Fahrgastraum 10 ein Heizgerät 22 auf, welches den Wärmeträger im Bedarfsfall erhitzt. Dieser Wärmeträger wird dann durch ein Förderaggregat 24 im Heizkreislauf umgewälzt, wobei es über einen im Fahrgastraum 10 angeordneten Wärmetauscher 26 strömt. Zu dem Heizkreislauf gehören alle mit 28 bezeichneten Leitungen, während die mit 30 bezeichneten Leitungen zum Kühlmittelkreislauf der Brennkraftmaschine 16 gehören. Das Förderaggregat 24 hat eine als Strömungspumpe ausgebildete Förderpumpe 32, deren Flügel oder Pumpenrad 34 in einer Förderkammer 36 umläuft. Die Förderkammer 36 hat eine zentral angeordnete Einströmöffnung 38, durch welche das zu fördernde Medium in die Förderkammer 36 strömt (Pfeil 40). Weiter hat das Förderaggregat 24 einen elektrischen Antriebsmotor 42, der ebenso wie die Förderpumpe 32 in einem gemeinsamen Gehäuse 44 untergebracht ist. Um den Elektromotor 42 von der Pumpenkammer 36 dicht zu trennen, weist das Gehäuse 44 ein Trennelement 46 auf, das im wesentlichen einen topfförmigen Querschnitt hat. Dabei ist der Topfrand 48 fest mit dem Gehäuse 44 verbunden. Der Topfboden 50 des Trennelements 46 dient als Abstützung für eine Lagerstelle 52 einer zum Elektromotor 42 gehörenden Ankerwelle 54. Weiter ist in dem Topfboden 50 eine Achse 56 fliegend verankert, die zur Lagerung des Förderglieds 34 der Pumpe 32 dient. Um eine Drehverbindung zwischen dem elektrischen Antriebsmotor 42 einerseits und dem Förderglied 34 der Heizkreislaufpumpe 32 sicherzustellen, weist das Förderaggregat 24 eine Magnetkupplung 58 auf, die aus zwei permanentmagnetischen Kupplungshälften 60 und 62 besteht. Die eine Kupplungshälfte 60 ist rohrförmig ausgebildet und auf der Achse 56 drehbar gelagert. Sie taucht also in den Topfteil des Trennelements 46 ein. An ihrer von dem Topfboden 50 abgewandten Stirnfläche ist das Förderglied 34 der Förderpumpe 32 drehfest angeordnet. Die andere Kupplungshälfte 62 ist glockenförmig ausgebildet und übergreift mit dem rohrförmigen Bereich 64 der Glockenform den topfförmigen Teil des Trennelements 46. Weiter ist die andere Kupplungshälfte 62 mit ihrer dem Antriebsmotor 42 zugewandten Seite mit dem Anker des Motors drehfest verbunden. Bei außerbetriebbefindlicher Pumpe stellen sich die beiden Kupplungshälften 60 und 62 so aufeinander ein, daß ihre Magnetpole einander gegenpolig gegenüberliegen. Da das Trennelement 46 nicht aus einem ferromagnetischen Material hergestellt ist, ergibt sich eine für die Förderung des Wärmeträgers im Heizkreislauf 28 ausreichende Mitnahmefestigkeit in der Kupplung 60, 62. Das Flügelrad 34 ist mit einer scheibenartigen Bodenplatte 66 versehen, die mit der rohrförmigen Kupplungshälfte 60 verbunden ist. Die von der Kupplungshälfte 60 abgewandte Scheibenoberfläche 68 weist mehrere im wesentlichen in Richtung der Achse 56 vorspringende Flügel 70 auf, deren freien Enden einen stumpfen Kegel bilden, welche durch einen entsprechend geformten kegeligen Abdeckring 72 (Figur 4) abgedeckt sind. Der Abdeckring 72 ist fest mit den Flügeln 70 verbunden. Die Anordnung der Flügel 70 des Förderglieds 34 ist aus Figur 5 ersichtlich. Es ergeben sich somit zwischen einander benachbarten Flügeln 70 sich nach außen erweiternde Kanäle. Weiter zeigen die Figuren 2 und 3 an dem freien Ende der Achse 56 eine Verlängerung 74, die aus dem aus Kupplungshälfte 60 und Flügelrad 34 gebildeten Bauelement herausragt, wenn dieses Bauelement 60, 34 weitgehend in den Topf des Trennelements 46 hineingedrückt ist. An der Verlängerung 74 ist ein ringförmiger Anschlag 76 angeordnet, der beispielsweise durch einen in einer Ringnut der Verlängerung 74 sitzenden Federring gebildet sein kann. Dem Ringanschlag 76 der Achse 56 ist ein Gegenanschlag 78 zugeordnet, der an der Stirnseite einer zum Bauelement 60, 34 gehörenden Lagerhülse 80 ausgebildet ist.

Während des normalen Betriebs der Heizvorrichtung nimmt das Bauelement 60, 34 eine erste, in Figur 2 dargestellte Betriebslage ein. Dabei wird dieses Bauelement so weit als möglich aus dem Topf des Trennelements 46 herausgedrückt, weil das Magnetfeld der beiden Kupplungshälften 60, 62 einen Axialschub in Richtung der Einlaßöffnung 38 bewirkt. Dies ist im Hinblick auf eine gute Effektivität der Förderpumpe 32 auch erwünscht, weil dadurch ein enger Ringspalt 82 zwischen der Gehäusewand 44 und dem Förderglied 34 eingehalten bleibt. Wenn jedoch die Heizkreislaufpumpe 32 von der Kühlkreislaufpumpe 20 überströmt wird, wird das Förderglied 34 in Richtung des Pfeiles 40 gesehen von einem erhöhten Förderdruck beaufschlagt. Dadurch gelangt das Bauelement 60, 34 in seine in Figur 3 dargestellte zweite Betriebsstellung, in welcher sich der Ringspalt 82 zwischen der Gehäuseewand 44 und dem Förderglied 34 erheblich vergrößert. Ein Überströmen der so ausgebildeten Pumpe bewirkt deshalb nicht mehr ein Abreißen der Mitnahmeverbindung zwischen den beiden Kupplungshälften 60 und 62. Dazu trägt im besonderen auch der Abdeckring 72 des Flügelrades 34 bei, auf den das überströmende Medium auftrifft, wenn es über die Einströmöffnung 38 auf den zentralen Bereich des Flügelrades 34 trifft.

## Patentansprüche

1. Vorrichtung zum Beheizen des Fahrgastraumes (10) eines Kraftfahrzeuges, mit einem an den Flüssigkeitskreisislauf (14) der Brennkraftmaschine (16) angeschlossenen Heizkreislauf (12), in dem eine elektromotorisch betriebene Förderpumpe (32) liegt, die als Strömungspumpe ausgebildet und über eine Magnetkupplung (58) mit dem Elektromotor (42) antriebsverbunden ist, wobei das als Flügelrad (34) ausgebildete, in einer Kammer (36) umlaufende Förderglied (34) der Pumpe (32) mit der einen Kupplungshälfte (60) und der Anker des Antriebsmotors (42) mit der anderen Kupplungshälfte (62) drehfest verbunden sind und eine Saugöffnung (38) der Pumpenkammer (36) das zu fördernde Medium einem zentralen, drehachsennahen Bereich des Fördergliedes (34) zuführt, dadurch gekennzeichnet, daß das Förderglied (34) der Pumpe (32) in Längsrichtung seiner Drehachse zwischen zwei Betriebsstellungen verschiebbar ist, von denen die eine Betriebsstellung der Saugöffnung (38) angenähert und die andere Betriebsstellung von der Saugöffnung (38) entfernt ist.

2. Vorrichtung nach Anspruch 1, dadurch gekennzeichnet, daß die eine Kupplungshälfte (60) ein rohrförmiger Permanentmagnet ist, der innerhalb der anderen, glockenförmigen, als Permanentmagnet ausgebildeten Kupplungshälfte (62) angeordnet ist, wobei sich zwischen den beiden Kupplungshälften ein topfförmiges, mit einem das Förderaggregat (24) umschließenden Gehäuse (44, 48) verbundenes Trennelement (46) angeordnet ist, welches einen Raum für den Elektromotor von der Pumpenkammer (36) innerhalb des Aggregatgehäuses separiert.

3. Vorrichtung nach Anspruch 2, dadurch gekennzeichnet, daß der Topfboden (50) des Trennelements (46) eine Abstützung für den Anker des Elektromotors (42) und für das Flügelrad (34) der Pumpe (32) bildet.

4. Vorrichtung nach Anspruch 3, dadurch gekennzeichnet, daß die rohrförmige Kupplungshälfte (60) auf einer in dem Topfboden (50) des Trennelements (46) fliegend gehaltenen Achse (56) drehbar gelagert und an der von dem Topfboden (50) abgewandten Stirnfläche der rohrförmigen Kupplungshälfte (60) das Flügelrad (34) der Pumpe (32) angeordnet ist.

5. Vorrichtung nach Anspruch 4, dadurch gekennzeichnet, daß die Achse (56) mit einer Verlängerung (74) aus dem durch die rohrförmige Kupplungshälfte (60) und dem Flügelrad (34) gebildeten Bauelement ragt.

6. Vorrichtung nach Anspruch 5, dadurch gekennzeichnet, daß an dem freien Ende der Verlängerung (74) ein Anschlag (76) angeordnet ist, dem ein Gegenanschlag (78) des Bauelements (60, 34, 80) zugeordnet ist.

7. Vorrichtung nach einem der Ansprüche 1 bis 6, dadurch gekennzeichnet, daß das Flügelrad (34) eine scheibenförmige Grundplatte (66) aufweist, an deren der Saugöffnung (38) zugewandten Fläche zur Saugöffnung (38) vorspringende Flügel (70) angeordnet sind, die sich von einem zentralen Bereich der Grundplatte (66) zu deren Randbereich erstrecken.

8. Vorrichtung nach Anspruch 7, dadurch gekennzeichnet, daß die freien, saugöffnungsnahen Enden der Flügel (70) mit einer ringförmigen Deckplatte (72) abgedeckt sind, so daß sich zwischen einander benachbarten Flügeln sich nach außen erweiternde Kanäle ergeben.

## Claims

1. Device for heating the passenger compartment (10) of a motor vehicle, having a heating circuit (12) connected to the liquid circuit (14) of the internal combustion engine (16), in which circuit there is situated an electromotively powered feed pump (32) which is configured as a flow pump and is drive-connected via a magnetic coupling (58) to the electric motor (42), the feed member (34) of the pump (32), which feed member is configured as an impeller (34) and circulates in a chamber (36), being connected in a rotationally secure manner to the one coupling half (60) and the armature of the drive motor (42) being connected in rotationally secure manner to the other coupling half (62) and a suction port (38) of the pump chamber (36) supplying the pumping medium to a central region of the feed member (34), which central region lies close to the rotational axis, characterized in that the feed member (34) of the pump (32) is displaceable in the longitudinal direction of its rotational axis between two operating settings, of which the one operating setting is close to the suction port (38) and the other operating setting is remote from the suction port (38).

2. Device according to Claim 1, characterized in that the one coupling half (60) is a tubular permanent magnet which is disposed within the other, bell-shaped coupling half (62) configured as a permanent magnet, there being disposed between the two coupling halves a pot-shaped, separating element (46) which is connected to a housing (44, 48) enclosing the feed assembly (24) and which separates a space for the electric motor from the pump chamber (36) within the housing of the assembly.

3. Device according to Claim 2, characterized in that the pot base (50) of the separating element (46) forms a support for the armature of the electric motor (42) and for the impeller (34) of the pump (32).

4. Device according to Claim 3, characterized in that the tubular coupling half (60) is mounted rotatably on an axle (56) held floatingly in the pot base (50) of the separating element (46) and on that end face of the tubular coupling half (60) which points away from the pot base (50) there is disposed the impeller (34) of the pump (32).

5. Device according to Claim 4, characterized in that the axle (56) juts with an extension (74) out of the structural element formed by the tubular coupling half (60) and the impeller (34).

6. Device according to Claim 5, characterized in that at the free end of the extension (74) there is disposed a stop (76) to which there is assigned a counter-stop (78) of the structural element (60, 34, 80).

7. Device according to one of Claims 1 to 6, characterized in that the impeller (34) exhibits a disc-shaped baseplate (66), on whose face pointing towards the suction port (38) there are disposed vanes (70) projecting in the direction of the suction port (38), which vanes extend from a central region of the baseplate (66) to its marginal region.

8. Device according to Claim 7, characterized in that those free ends of the vanes (70) located close to the suction port are covered with an annular cover plate (72), so that between mutually adjacent vanes there are created outwardly extending channels.

## Revendications

1. Dispositif pour chauffer l'intérieur d'un véhicule à moteur, avec un circuit de chauffage (12) raccordé au circuit du liquide (14) du moteur à combustion interne (16), circuit de chauffage (12) dans lequel se trouve une pompe de refoulement (32) entraînée par un moteur électrique, pompe qui est constituée somme une pompe de circulation et est reliée au moteur électrique (42) pour être entraînée par l'intermédiaire d'un embrayage magnétique (58), l'organe de refoulement (34) de la pompe (32) constitué comme une roue à aubes (34) tourne dans une chambre (36) étant relié de façon solidaire en rotation à l'une des moitiés de l'embrayage (60) et l'induit du moteur d'entraînement (42) étant relié à l'autre moitié de l'embrayage (62), un orifice d'aspiration (38) de la chambre (36) de la pompe amenent le fluide à refouler à une zone centrale, proche de l'axe de rotation de l'organe de refoulement (34), dispositif caractérisé en ce que l'organe de refoulement (34) de la pompe (32) peut coulisser dans le sens longitudinal de son axe de rotation entre deux positions de fonctionnement, dont l'une se trouve à proximité de l'orifice d'aspiration (38) et l'autre se trouve éloignée de l'orifice d'aspiration (38).

2. Dispositif selon la revendication 1, caractérisé en ce que l'une des moitiés de l'embrayage (60) est un aimant permanent en forme de tube, qui est disposé à l'intérieur de l'autre moitié de l'embrayage (62), en forme de cloche, constituée sous la forme d'un aimant permanent, un élément de séparation (46) en forme de pot, relié à un carter (44, 48) qui entoure l'unité de refoulement (24) est isposé entre les deux moitiés de l'embrayage. L'élément de séparation (46) crée un espace pour le moteur électrique de la chambre de pompe (36) à l'intérieur du carter de l'appareil.

3. Dispositif selon la revendication 2, caractérisé en ce que le fond du pot (50) de l'élément de séparation (46) forme un appui pour l'induit du moteur électrique (42) et pour la roue à aubes (34) de la pompe (32).

4. Dispositif selon la revendication 3, caractérisé en ce que la moitié de l'embrayage en forme de tube (60) est montée de façon à pouvoir tourner sur un axe (56) maintenu en porte à faux dans le fond du pot (50) de l'élément de séparation (46) et la roue à aubes (34) de la pompe (32) est disposée sur la face frontale, située à l'opposé du fond du pot (50), de la moitié de l'embrayage (60) en forme de tube.

5. Dispositif selon la revendication 4, caractérisé en ce que l'axe (56) fait saillie par une prolongation (74) à partir de la pièce constitutive formée par la moitié de l'embrayage (60) en forme de tube et la roue à aubes (34).

6. Dispositif selon la revendication 5, caractérisé en ce que sur l'extrémité libre de la prolongation (74) est disposée une butée (76) à laquelle est associée une contre-butée (78) de la pièce constitutive (60, 34, 80).

7. Dispositif selon l'une des revendications 1 à 6, caractérisé en ce que la roue à aubes (34) présente une plaque de base (66) en forme de disque, sur la surface tournée vers l'orifice d'aspiration (38) de laquelle sont disposées des ailettes (70) faisant saillie en direction de l'orifice d'aspiration (38), ailettes qui s'étendent depuis une zone centrale de la plaque de base (66) vers la zone de son pourtour.

8. Dispositif selon la revendication 7, caractérisé en ce que les extrémités libres, proches de l'orifice d'aspiration des ailettes (70) sont recouvertes par une plaque de recouvrement (72) en forme d'anneau, de telle sorte qu'il y ait des canaux qui aillent en s'élargissant vers l'extérieur entre les ailettes voisines les unes des autres.
